# FASCICULE DE BREVET EUROPEEN

(11) **EP 0 456 577 B1**
(45) Date de publication et mention de la délivrance du brevet: **04.10.1995**
(21) Numéro de dépôt: 91401203.4
(22) Date de dépôt: 07.05.1991
(51) Int. Cl.: G21C 3/352, B23K 26/08

(54) **Procédé et dispositif de fabrication de grilles d'assemblages de combustible nucléaire**
Verfahren und Vorrichtung zur Herstellung von Kernbrennstabbündelabstandshaltern
Method and device for fabrication of nuclear fuel assembly grids

(30) Priorité: 07.05.1990 FR 9005730
(43) Date de publication de la demande: 13.11.1991
(73) Titulaire: FRANCO-BELGE DE FABRICATION DE COMBUSTIBLE, F-92400 Courbevoie (FR)
(72) Inventeur: Thiebaut, Bernard, F-26380 Peyrins (FR); Duthoo, Dominique, F-26100 Romans (FR); Germanaz, Jean Jacques, F-26100 Romans (FR); Angilbert, Bernard, F-26350 Crepol (FR)
(74) Mandataire: Fort, Jacques

(56) Documents cités:
- EP-A- 0 088 021
- EP-A- 0 168 673
- GB-A- 2 097 148
- US-A- 4 710 606

## Description

L'invention a pour objet un procédé et un dispositif de fabrication de grilles destinées à être incorporées dans des assemblages de combustible pour réacteur nucléaire. Elle trouve une application particulièrement importante dans la fabrication des grilles destinées à des assemblages dont l'ossature comprend des pièces d'extrémité reliées par des tubes guides emprisonnés dans certains des alvéoles de grilles réparties régulièrement le long des tubes guides, les autres alvéoles des grilles supportant les crayons de combustible de l'assemblage.

Parmi ces grilles, il sera surtout question par la suite de celles dont les grandes faces ont une forme carrée et qui comprennent deux jeux de plaquettes intérieures disposées suivant deux directions orthogonales et assemblées à mi-fer afin de définir les cellules élémentaires que traversent les crayons et les tubes guides. Les plaquettes intérieures sont reliées, à leur périphérie, à une des plaquettes formant une ceinture. Pour assurer la cohésion des grilles, ces pièces constitutives sont solidarisées à leurs intersections.

On a également prévu des grilles, notamment en vue d'assemblages pour réacteur sous-modéré, qui ont une section hexagonale et qui comportent trois jeux de plaquettes entrecroisées. L'invention, bien que particulièrement intéressante dans le cas des grilles dont les grandes faces ont une forme carrée et dont les cellules sont réparties aux noeuds d'un réseau carré, s'applique également aux grilles dont les grandes faces ont une forme hexagonale.

Jusqu'à présent les pièces constitutives des grilles étaient généralement solidarisées par brasage manuel, c'est-à-dire par une opération longue et fastidieuse qui, au surplus, ne garantit pas une reproductibilité pleinement satisfaisante.

On a cependant proposé divers procédés et dispositifs permettant de souder les pièces constitutives les unes aux autres de façon plus ou moins automatique. L'invention concerne un procédé et un dispositif du genre décrits dans le document FR-A-2 522 560, conformes aux préambules des revendications 1 et 8.

En effectuant le soudage dans une atmosphère protectrice de gaz inerte, on évite toute oxydation des soudures, ce qui permet en particulier d'appliquer le procédé non seulement à des grilles en alliage à haute resistance, tel que l'INCONEL, mais aussi à des grilles dont les constituants sont en alliage à base de zirconium.

Suivant le document FR-A-2 522 560 il semble que l'atmosphère protectrice soit obtenue par balayage, ce qui implique des pertes importantes de gaz inerte. Le générateur laser est maintenu fixe au cours du soudage d'une face, sauf pour les soudures effectuées sur la ceinture, pour lesquelles on défléchit le faisceau à l'aide d'un jeu de miroirs. La variété des déplacements précis des grilles à l'intérieur de la chambre ne permet pas de garantir une précision suffisante pour être compatible avec la taille très faible de la tache focale du faisceau laser. De plus, la chambre doit avoir un volume très important.

Les documents FR-A-2 532 216 et EP-A-0 102 252 décrivent eux aussi un procédé de soudage à l'aide d'un générateur laser fixe. Le faisceau laser est dirigé et focalisé dans une chambre ouverte, soumise à un balayage d'argon, dans laquelle une grille est animée de mouvements orthogonaux de déplacement. Ce procédé exige des débits gazeux très importants, la captation des gaz pollués par les tirs laser est difficile et un contrôle des fuites de la chambre ouverte exige des jeux très réduits, difficiles à réaliser.

Le brevet US-A-4 710 606 décrit un robot de soudage dans lequel un faisceau laser doit être déplacé suivant cinq degrés de liberté par des miroirs, ce qui implique une grande complexité du mécanisme et une accumulation des tolérances.

Enfin le document EP-A-0 168 673 décrit une installation de soudage à un seul générateur laser et deux chambres de soudage utilisées alternativement.

L'invention vise notamment à fournir un procédé et une installation de soudage de grilles par faisceau laser du type ci-dessus défini, permettant d'effectuer, en séquence et de façon automatique les soudures nécessaires dans des conditions assurant le maintien mécanique des pièces et l'absence de déformations et d'oxydation, tout en évitant les déplacements complexes de nature à nuire à la précision du soudage du fait d'un cumul de jeux.

Dans ce but, l'invention propose notamment un procédé du type ci-dessus défini, conforme à la revendication 1.

Ce procédé répartit judicieusement les mouvements entre le faisceau laser, l'optique de focalisation nécessaire et le cadre.

Bien que ce procédé présente un intérêt tout particulier dans le cas des grilles dont les plaquettes et la ceinture sont en alliage à base de zirconium, il est également utilisable dans le cas des grilles dont les pièces constitutives sont en alliage à base de nickel et de chrome ou en acier.

Cette disposition permet de simplifier considérablement les dispositifs d'orientation, donc d'avoir une meilleure précision de mise en place. Sur chaque face, les soudures sont effectuées suivant un même plan, c'est-à-dire sans modification de la distance au générateur laser, sauf pour des soudures particulières, telles que les soudures d'angle de la grille.

La grille restant dans son cadre du début jusqu'à la fin des opérations de soudage, le transfert d'une chambre à l'autre ne perturbe pas la position relative des pièces constitutives de la grille.

Le déchargement d'une grille, le chargement d'une autre grille à souder et la mise en atmosphère inerte d'une chambre peuvent s'effectuer pendant le soudage de la grille occupant l'autre chambre, c'est-à-dire en temps masqué.

Dans la pratique, la mise en atmosphère de gaz inerte s'effectuera par pompage de la chambre jusqu'à obtention d'un vide primaire, puis remplissage en gaz inerte de façon que l'atmosphère dans laquelle s'effectue le soudage contienne moins de 50 vpm d'oxygène. Pour soustraire les hublots aux contraintes alternées de pression, on peut les protéger par des couvercles pendant la mise sous vide.

Il est souvent avantageux de constituer certaines au moins des soudures en effectuant des tirs focalisés en deux points situés sur deux lignes parallèles et à faible distance l'une de l'autre. Pour cela, le trajet optique du faisceau laser peut être défini par des moyens optiques, tels que des miroirs ou lentilles, mis en vibration. On synchronise alors les vibrations de la lentille de focalisation avec les pulsations du laser, de façon que chaque tir intervienne alors que le trajet optique est orienté vers le point qui doit recevoir l'énergie.

L'invention propose également une installation de solidarisation par soudage laser des diverses pièces constitutives d'une grille, conforme à la revendication 8. D'autres caractéristiques encore font l'objet des revendications dépendantes.

L'invention sera mieux comprise à la lecture de la description qui suit d'un mode particulier d'exécution, donné à titre d'exemple. La description se réfère aux dessins qui l'accompagnent, dans lesquels :
- la Figure 1 est un schéma en perspective montrant une fraction d'une grille à laquelle est applicable le procédé selon l'invention ;
- les Figures 1A, 1B, 1C, 1D sont des schémas à grande échelle, montrant les emplacements indiqués par des cercles portant les références A, B,C et D sur la Figure 1 ;
- la Figure 1DD montre une variante de la Figure 1D ;
- la Figure 1E montre un mode de fixation de ceinture constituant une variante de la Figure 1D ;
- la Figure 2 est un schéma en perspective destiné à montrer la disposition relative des composants principaux d'une installation suivant l'invention ;
- la Figure 3 est une vue, depuis la gauche, de l'installation de la Figure 1, montrant le bâti de l'installation et les éléments qu'il porte ;
- la Figure 4 est une vue de face de la Figure 1, montrant les chambres de soudage et la partie du bâti qui les porte ;
- la Figure 4A est une vue de dessus d'une fraction de l'installation de la figure 1 ;
- la Figure 5 est une vue de face à grande échelle montrant le dispositif de positionnement contenu dans la première chambre de soudage de l'installation ;
- la Figure 5A est une vue en coupe suivant la ligne A-A de la Figure 5, montrant le plateau du dispositif de positionnement de la première chambre de soudage ;
- les Figures 6 et 6A, similaires aux Figures 5 et 5A, montrent le dispositif de positionnement de la seconde chambre de soudage ;
- la Figure 7 est un schéma en perspective montrant le trajet du faisceau laser de soudage ;
- la Figure 8 montre une constitution possible d'une optique de focalisation permettant également de faire osciller le trajet optique ;
- la Figure 9 est une vue de face à grande échelle, en coupe partielle, montrant les moyens de pressage des couvercles de protection ; et
- la Figure 10 est une vue de détail, à grande échelle et en coupe, d'un clapet d'équilibrage.

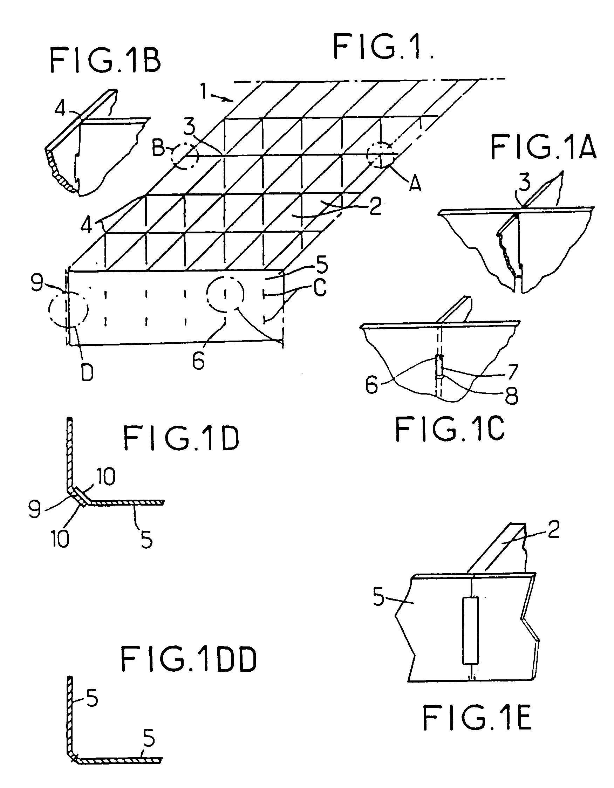

L'installation qui sera maintenant décrite permet notamment de solidariser par soudage les pièces constitutives d'une grille 1 du genre montré en Figure 1, qui peut avoir la constitution détaillée décrite dans le document EP-A-0 159 228 ou FR-A-2 474 229. La grille 1 comprend deux jeux entrecroisés de plaquettes élémentaires 2 assemblées à mi-fer. Une soudure de solidarisation 3, dite "de type A", dont le détail est indiqué sur la Figure 1A, solidarise les plaquettes à chaque intersection, sur chacune des deux grandes faces de la grille 1. Les bords des plaquettes 2 forment, avec des plaquettes périphériques 5 constituant la ceinture, une intersection en forme de T qui reçoit, sur chaque face, une soudure 4, dite "de type B", montrée en Figure 1B.

Les plaquettes 2 comportent à leurs extrémités, des tenons qui s'engagent dans des mortaises pratiquées dans les plaquettes 5 de la ceinture. Chaque extrémité peut notamment comporter deux ou trois tenons 7 s'engageant dans des mortaises respectives 8 (Figure 1C). Ces tenons, dont certains peuvent être déformés pour réaliser un bloquage mécanique, sont fixés par des soudures sur chant dites "de type C".

Enfin, des cordons de soudure 9 solidarisent les éléments de la ceinture par liaison de bords tombés 10 pratiqués aux extrémités des plaquettes périphériques 5. Ces soudures, montrées en Figure 1D, sont dites "de type D". Les soudures "du type D" peuvent être remplacées par des soudures bord-à-bord, comme indiqué sur la Figure 1DD.

Dans certains cas, les plaquettes constituant la grille sont solidarisées non pas par un soudage à recouvrement, mais par un soudage bord-à-bord au niveau d'une plaquette interne 2 (Figure 1E). Ce type de soudure est généralement pratiqué au niveau de la seconde plaquette interne en partant d'un coin de la grille, de façon à permettre une mise en forme de la plaquette définissant l'alvéole situé au coin de la grille.

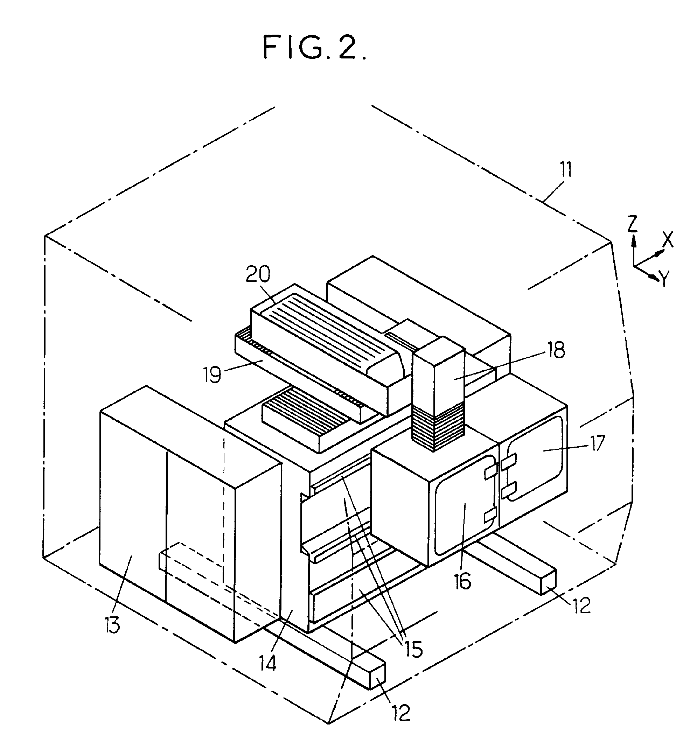

L'installation montrée en Figures 2 et suivantes permet d'exécuter de façon satisfaisante les nombreux points de soudure requis pour réaliser une grille du genre montré en Figure 1.

Pour maintenir tous les composants de la grille 1 dans une position relative correcte, chaque grille assemblée est d'abord mise dans un cadre destiné à maintenir les composants de la grille dans une position bien déterminée et à constituer un ensemble manipulable pouvant être amené dans toutes les orientations requises pour le soudage. Le cadre peut avoir la constitution décrite dans le document EP-A-0 159 228, auquel on pourra se reporter.

L'installation dont la constitution de principe est montrée en Figure 2 est contenue dans une cellule 11 dont la face avant est équipée de panneaux transparents mobiles permettant l'accès à l'enceinte pour le chargement/déchargement. L'installation comprend une structure support ayant une poutre 12 qui supporte des armoires contenant les moyens d'alimentation électrique et les circuits de régulation et de commande des opérations de soudure selon un programme pré-enregistré et un bâti 14 qui porte les divers composants mobiles. Sur ce bâti 14 sont fixées des glissières 15 (Figures 2 à 4), disposées horizontalement suivant une direction X, sur lesquelles se déplacent un chariot principal 21 et un chariot auxiliaire 22 placé au-dessous. Ces chariots sont reliés par un bras 24. Le chariot principal 21 porte deux chambres de soudage 16 et 17 accolées, présentant chacune une porte avant d'introduction et d'enlèvement des grilles. Le chariot auxiliaire 22 porte les organes de conditionnement de l'atmosphère des chambres et notamment la pompe à vide. Les chariots 21 et 22 sont mobiles selon l'axe X. Leur entraînement est assuré par un vérin et leur positionnement précis par des butées à amortisseurs.

Le plafond de chacune des chambres 16 et 17 comporte un hublot transparent pour le rayonnement de soudage. Ce rayonnement est fourni par une source laser portée par une table à mouvements croisés suivant la direction X et la direction horizontale Y orthogonale à X.

Le générateur laser peut être regardé comme comportant un laser proprement dit 20 et une optique 18 de renvoi suivant la direction verticale Z et de focalisation à distance ajustable. Le laser peut être porté par un berceau 26 fixé au plateau supérieur 25 de la table à mouvements croisés 19.

Pour souder des grilles en alliage de zirconium, on peut utiliser un laser pulsé de type YAG de 400 W. Une plage de déplacement de 400 mm en X et en Y permet de réaliser l'ensemble des soudures d'une grille d'assemblage combustible pour réacteur à eau sous pression du genre utilisé à l'heure actuelle. On décrira plus loin un exemple d'optique de focalisation 18 permettant d'ajuster le foyer de façon qu'il se place exactement à l'endroit de la soudure à exécuter.

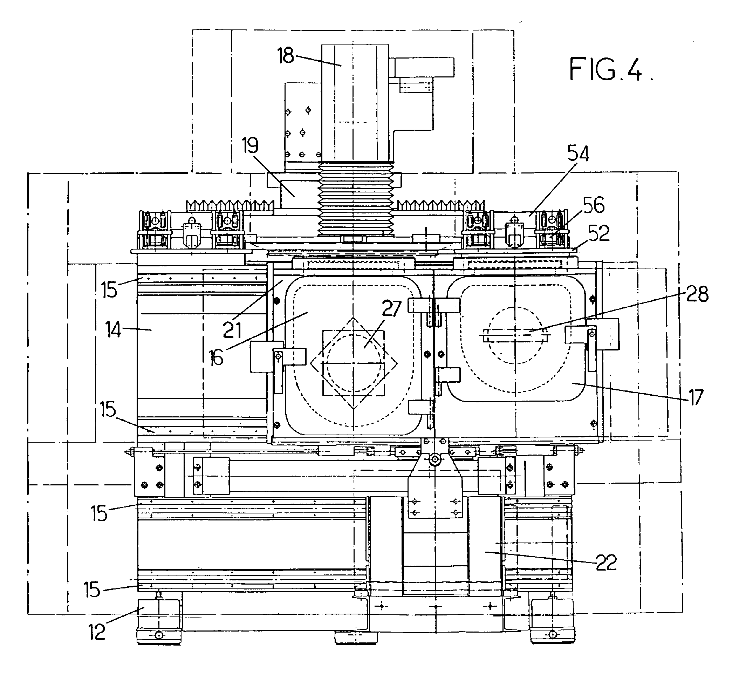

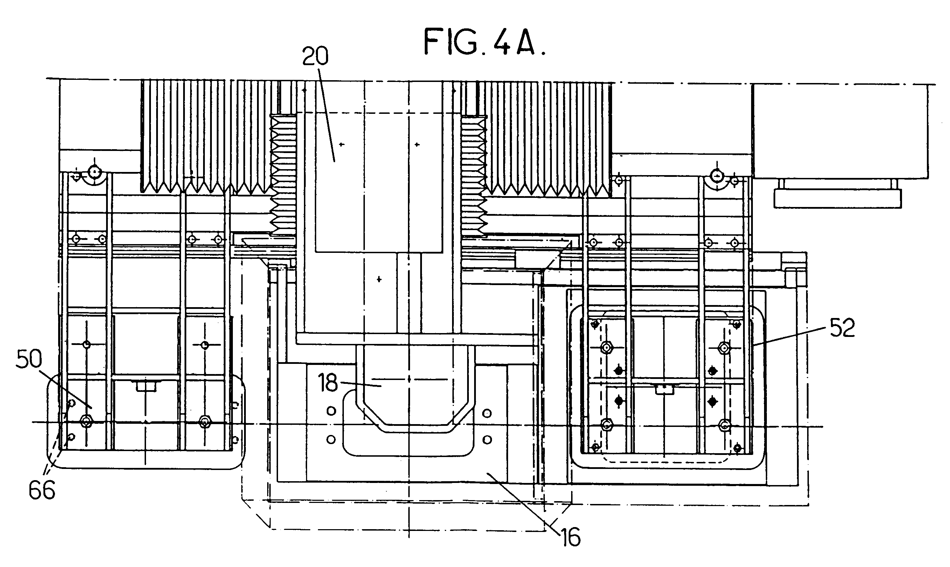

La chambre 16 est munie d'un dispositif 27 d'orientation autour d'un axe parallèle à la direction Y, destiné à recevoir une grille contenue dans son cadre pour la réalisation des soudures de types C et de type D (ou DD ou E). Cette chambre est représentée sur la Figure 4 dans une position où son hublot d'entrée est situé sous la zone balayée par le déplacement du faisceau laser, pour l'exécution des soudures de la grille contenue dans la chambre.

La paroi arrière de la chambre 16 est traversée par le plateau 35 du dispositif 27 qui permet de maintenir une grille contenue dans son cadre et de lui donner les huit orientations requises pour effectuer les soudures de type C (et, éventuellement, E), ainsi que les soudures de type D ou DD, lorsqu'elles existent sur les quatre coins de la grille. En d'autres termes, le dispositif 27 est destiné à amener la grille dans les quatre orientations requises pour permettre l'exécution des soudures C, et éventuellement E, sur les quatre faces de la ceinture et, dans d'autres cas, les quatre orientations supplémentaires nécessaires pour l'exécution des soudures sur les coins de la grille.

Dans tous les cas, les grandes faces de la grille seront parallèles à la direction Z, c'est-à-dire au trajet du faisceau laser au cours du soudage. Le réglage de la distance de travail permet d'exécuter aussi bien les points de soudure de type C, que les cordons de soudure de type D ou DD, lorsque ces derniers sont prévus.

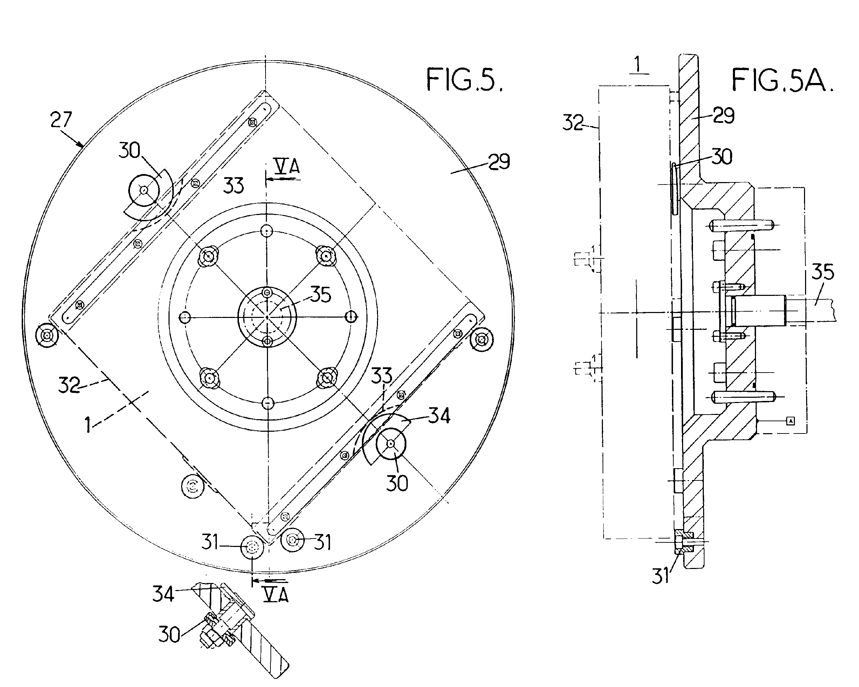

Le dispositif d'orientation 27 comporte un plateau circulaire 29 équipé de cames 30 de fixation du cadre-gabarit 32 contenant une grille, dont le pourtour est schématisé en tirets sur les Figures 4, 5 et 5A. Les deux cames 30 permettent d'appliquer le cadre contre des pions de positionnement 31 et contre le plateau. La partie pivotante des cadres pivote dans des gorges en croissant 33 prévues sur le cadre.

Le plateau 29 est fixé sur le disque 35, solidarisé par l'arbre de sortie à un moteur d'entraînement en rotation non représenté, équipé d'un codeur donnant une indication d'orientation aux armoires 13.

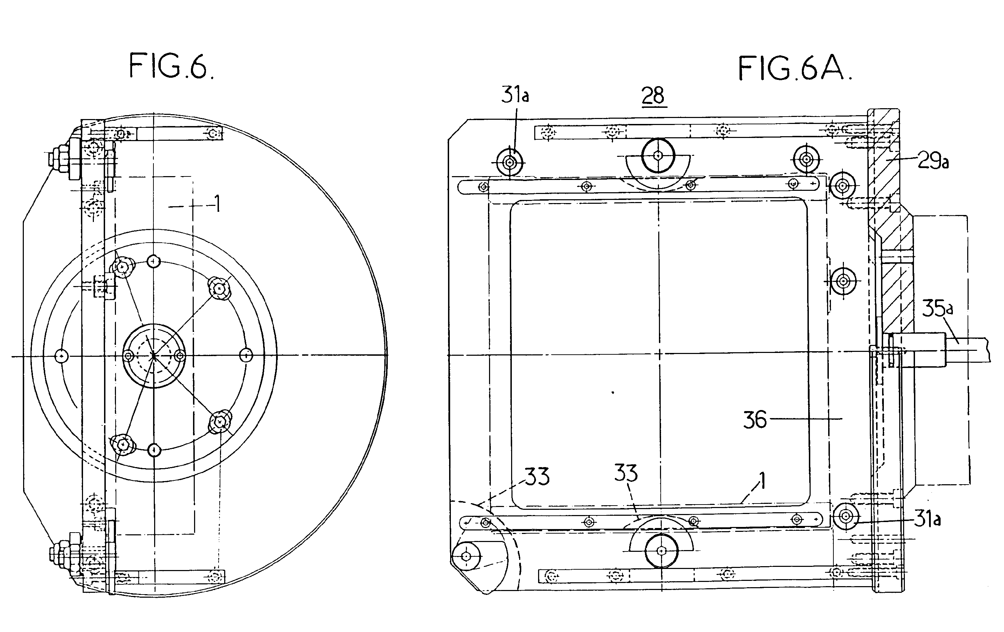

La chambre 17 est, elle aussi, équipée d'un dispositif d'orientation 28, montré en Figures 6 et 6A. Ce dispositif comporte lui aussi un plateau 29a fixé à un disque 35a d'orientation autour d'un axe parallèle à la direction Y. Mais le plateau 29a est destiné à recevoir le cadre-gabarit dans une position où les grandes faces de la grille et deux des côtés sont parallèles à l'axe d'orientation. Pour cela, le plateau 29a se compose d'une plaque fixée directement sur le disque 35 et d'un socle 36 portant les cames 30a et les pions 31a, orthogonal à la plaque. Dans le socle 36 est ménagée une ouverture 37 de taille suffisante pour donner accès à tous les points de soudure à exécuter sur la grande face de la grille qui est tournée vers le socle.

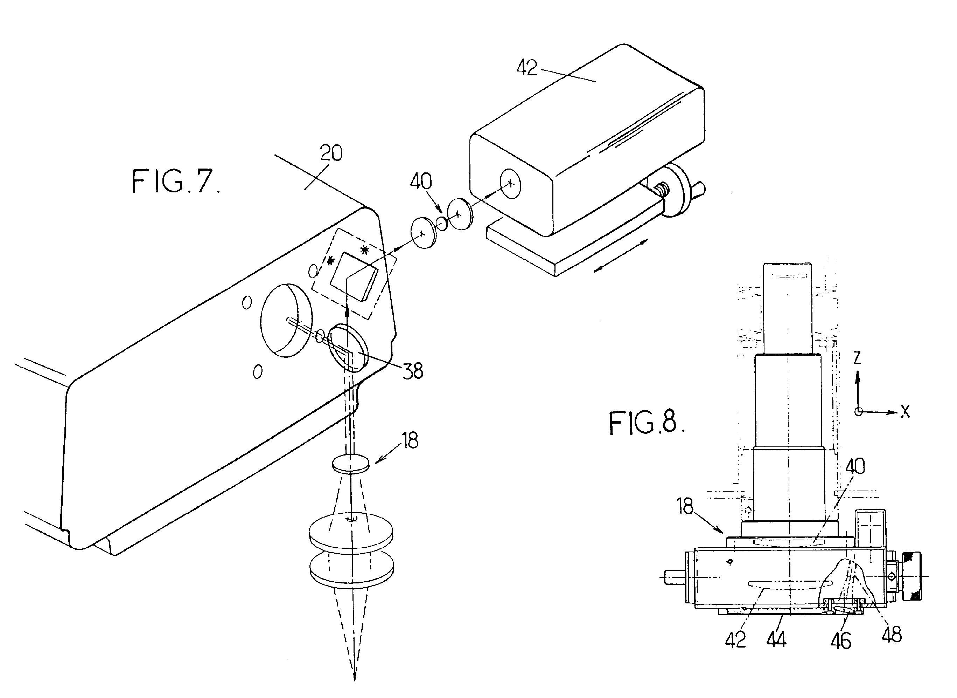

La source laser peut notamment avoir la constitution schématisée sur la figure 7. Le faisceau fourni par le laser 20 est renvoyé par un miroir dichroïque 38 vers l'optique 18 de focalisation constituée de plusieurs lentilles. Cet ensemble de lentilles est monté dans une monture motorisée et déplaçable suivant l'axe Z selon une course de 200 mm, de façon à pouvoir régler au mieux la distance de travail quelles que soient les soudures à réaliser.

Pour autoriser ces réglages, l'image de l'emplacement à souder, reprise par l'optique 18 et traversant le miroir dichroïque 38 est captée par une caméra CCD qui transmet cette image à un moniteur solidaire de la console de commande. L'opérateur peut alors effectuer la mise au point à l'aide d'un mécanisme non représenté de façon que l'obtention d'une image nette en lumière visible indique une distance de travail correcte. Les déplacements suivant l'axe Z de l'optique 18 étant contrôlés par l'électronique de commande, l'ajustement de la distance de travail est en fait effectué automatiquement.

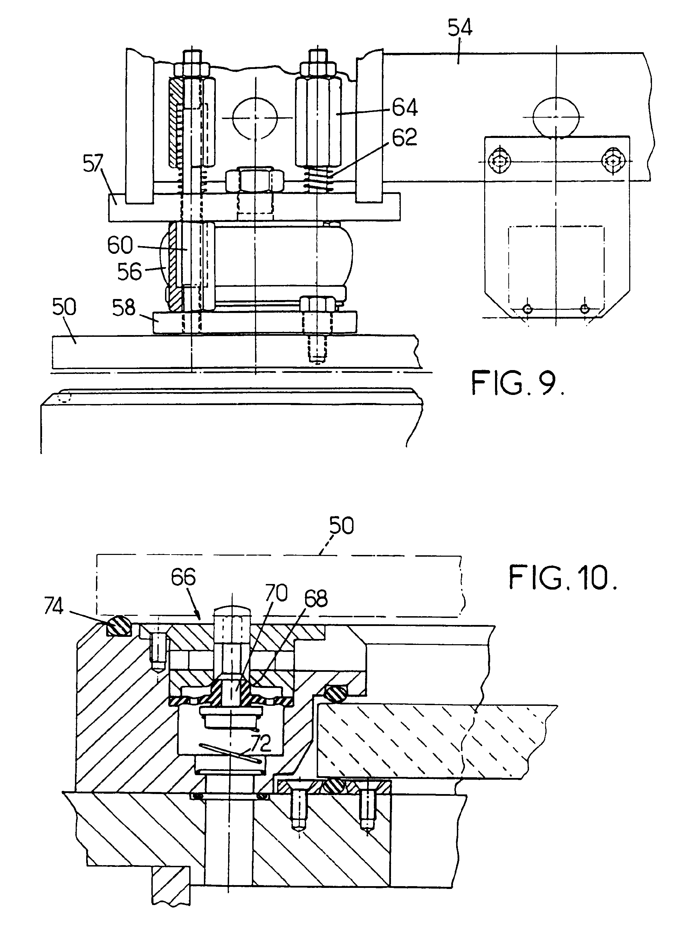

L'optique 18 peut avoir la constitution montrée sur la figure 8. Cette optique 18 comporte une monture supportant trois lentilles, 40, 42 et 44. Les lentilles 40 (divergentes) et 42 (collimatrices), constituent en fait un télescope focal x 2 permettant de diminuer la divergence du faisceau. La lentille 44 focalise le faisceau sur le point à souder.

De plus, la lentille 44 est montée sur un coulisseau qui permet de la faire osciller suivant la direction X avec une amplitude correspondant à la distance désirée entre les points de soudure à effectuer pour réaliser les soudures de type C, D ou E.

L'amplitude de mouvement peut par exemple être réglable de 0 à 2 mm.

Le mouvement d'oscillation est assuré au moyen d'électro-aimants déplaçant le coulisseau contre des butées réglables.

Le boîtier montré en Figure 8 comporte également des moyens d'éclairage de l'emplacement où doit s'effectuer le tir, constitués par une lentille 46 de focalisation du faisceau de sortie de deux fibres optiques 48 alimentées en lumière par un générateur non représenté.

Dans une variante de réalisation de l'invention, les deux chambres 16 et 17 sont fixes et la table à mouvements croisés est montée sur des moyens permettant d'amener le générateur laser successivement au-dessus de la chambre 16 et au-dessus de la chambre 17.

Pour limiter la consommation de gaz inerte, l'installation est avantageusement prévue pour remplacer l'air par ce gaz non pas par balayage, mais par mise sous vide puis remplissage.

La mise sous vide semble à première vue exclue, car des hublots en verre ne résisteraient pas aux forces de pression appliquées au cours de la mise sous vide.

Ce problème est résolu, dans le mode de réalisation montré en figures 4, 4A, 9 et 10 en montant, sur le bâti de l'installation, des couvercles destinés à s'appliquer autour des hublots lors de la mise sous vide et à équilibrer la pression qui règne sur leurs faces opposées.

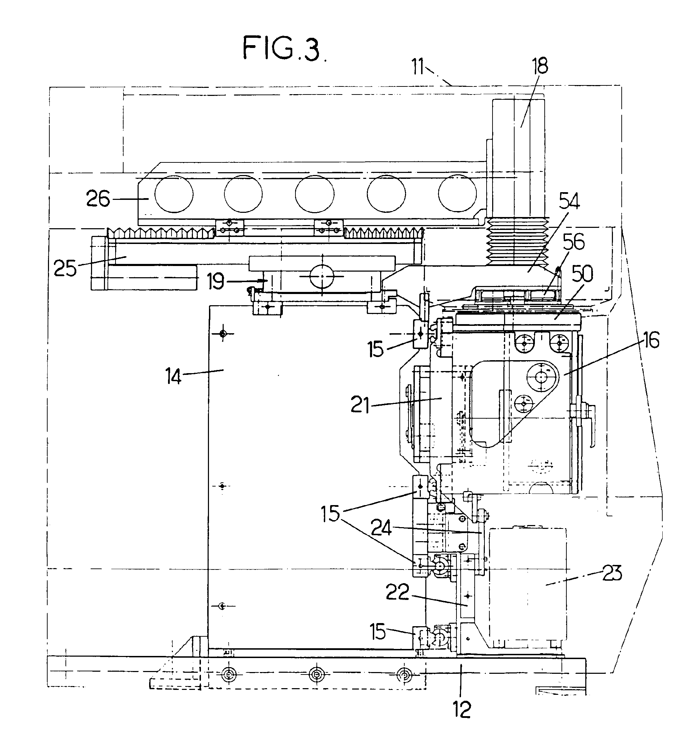

Les couvercles 50 et 52 sont prévus pour être utilisés en alternance, et s'appliquer contre le hublot de la chambre qui n'est pas en alignement avec l'optique du laser. Pour cela, les couvercles 50 et 52 sont reliés à un châssis support 54 par l'intermédiaire de mécanismes de commande respectifs. Le mécanisme montré schématiquement sur les figures 3, 4 et 9 comporte des coussins gonflables 56 interposés entre une plaque d'appui 57 solidaire du châssis et un patin 58 fixé aux couvercles. Les patins sont guidés par des tiges 60 coulissant dans la plaque d'appui 57 et solicités vers une position haute par des ressorts 62. Le déplacement vers le bas des patins 58 et des couvercles est limité par l'appui d'écrous 64, vissés sur une partie filetée terminale des tiges 60, contre les plaques 57.

Chaque hublot est muni de plusieurs soupapes d'équilibrage occupant par exemple les emplacements indiqués en 66 sur la figure 4A, pour l'un des hublots. Chaque soupape comprend un passage ménagé dans la paroi de la chambre, dont une partie est limitée par un siège 68. Ce siège est prévu pour recevoir un opturateur 70, repoussé par un ressort 72 vers sa position de fermeture. En position de fermeture, l'obturateur 70 présente une partie en saillie au-dessus de la paroi de la chambre. Cette paroi porte un joint d'étanchéité annulaire 74 entourant l'ensemble des clapets. Lorsque le couvercle 50 est appliqué contre le joint 74, il enfonce l'obturateur et met en liaison l'intérieur de la chambre avec l'espace compris entre le hublot et le couvercle. Cette communication est fermée dès que le couvercle est retiré.

Le procédé est mis en oeuvre de la façon suivante dans l'installation montrée sur les Figures 2 à 8.

Les plaquettes de grille assemblées sont d'abord placées dans le cadre qui constitue un gabarit maintenant ces plaquettes dans une position bien déterminée. Une première séquence d'opérations est destinée à réaliser les soudures sur la ceinture. Pour cela, le cadre 32 contenant la grille est placé sur le plateau 29 dans la chambre 16 et bloqué à l'aide des cames 30. La chambre 16 est fermée. Le couvercle de protection du hublot de la chambre 16 est appliqué contre la paroi de la chambre pour équilibrer les pressions de part et d'autre du hublot. L'intérieur de la chambre est amené sous vide primaire à l'aide de la pompe du dispositif de conditionnement 23, puis rempli d'argon. Il suffit de deux séquences de pompage et de remplissage pour arriver à une atmosphère suffisamment pure, dont la teneur en oxygène est inférieure à 50 vpm et la teneur en eau est inférieure à 150 vpm. Le couvercle peut alors être soulevé. La surpression dans la chambre peut être de 40 mbars et maintenue avec un débit d'argon de 20 à 60 l/mn permet d'évacuer les fumées de soudage apparaissant dans la chambre. L'installation comporte avantageusement des moyens d'analyse de l'argon qui sort par un évent, permettant de vérifier que les teneurs en oxygène et en humidité ne dépassent pas les seuils indiqués plus haut.

La chambre 16 étant maintenue fixe sur ses glissières au-dessous de l'optique 18, les soudures de type C et D (ou E) peuvent être exécutées de façon automatique. Le laser est dirigé sur chaque emplacement de soudage à l'aide de la table à mouvements croisés 19. On commence avantageusement par les soudures de type D ou E, les soudures de type D nécessitant une distance de travail différente des soudures de type E. Chaque soudure peut être réalisée par apport d'une énergie comprise entre 14 et 22 Joules par impulsion, à une cadence de 7 à 16 Hz, la durée d'impulsion étant de 5ms environ.

Les soudures de type C peuvent être réalisées avec des paramètres du même ordre que ceux nécessaires aux soudures en cordon D et E.

Pendant que le soudage s'effectue de façon automatique, sans déplacement des chambres 16 et 17, l'opérateur peut installer dans la chambre 17 une seconde grille, dont seules les soudures de type A et B restent à exécuter. Le temps nécessaire au chargement de cette chambre et au conditionnement de l'atmosphère est inférieur à celui du soudage dans la chambre 16.

Lorsque les soudures à effectuer dans la chambre 16 sont achevées, les chariots 21 et 22 sont déplacés sur leurs glissières, de façon automatique, sous la commande de l'électronique contenue dans les armoires 13. A la suite de ce déplacement, le hublot de la chambre 17 est sous l'optique 18. La chambre 16 est alors ouverte et la grille qui l'occupait est retirée et remplacée par une nouvelle grille, tandis que sont effectuées les soudures de type A et B.

Ces dernières soudures exigent des déplacements du générateur laser par la table 19 suivant les deux directions X et Y. Chaque soudure peut être effectuée en général par une ou deux impulsions d'une durée d'environ 5 ms, effectuée à une fréquence de 5 à 10 Hz et avec une énergie totale de 14 à 24 Joules par impulsion.

Les soudures sont effectuées d'abord sur une grande face, puis sur l'autre, après rotation de 180° du plateau 29a.

## Revendications

1. Procédé de fabrication de grille destinée à un assemblage de combustible de réacteur nucléaire, suivant lequel :
on place la grille (1) dont les pièces constitutives (2,5) sont à solidariser dans un cadre de mise en forme et de maintien mécanique présentant des passages d'accès aux points à souder sur les deux grandes faces et sur les côtés de la grille ;
on saisit le cadre contenant la grille à l'aide d'un premier dispositif (27) d'orientation autour d'un premier axe, placé dans une première chambre étanche (16) occupée par une atmosphère de gaz inerte ; on effectue les soudures sur une face à la fois à l'aide d'un faisceau laser orthogonal à l'axe d'orientation du dispositif et fourni par une source laser placée hors de la chambre et pénétrant dans celle-ci à travers un hublot transparent, puis on répète l'opération sur d'autres faces,
caractérisé en ce que,
au cours du soudage sur une face de la grille, on déplace le faisceau laser suivant deux directions orthogonales entre elles et à la direction du faisceau laser, alors que le cadre est maintenu immobile dans la première chambre (16), avant de répéter l'opération sur une autre face on fait tourner la grille à l'aide du premier dispositif, autour du premier axe qui est orthogonal à la direction du faisceau laser, jusqu'à avoir effectué toutes les soudures sur les faces parallèles au premier axe ;
ensuite on place la grille, toujours contenue dans son cadre, dans une seconde chambre (17) munie d'un second dispositif (28) d'orientation autour d'un second axe qui est parallèle au premier, mais sur lequel la grille est placée dans une orientation perpendiculaire à celle qu'elle avait sur le premier dispositif, et
on effectue les soudures sur les grandes faces de la grille, chaque fois alors que le cadre est maintenu immobile.

2. Procédé selon la revendication 1, caractérisé en ce que le déchargement d'une grille, le chargement d'une autre grille à souder et la mise en atmosphère inerte d'une chambre (16, 17) sont effectués pendant le soudage de la grille occupant l'autre chambre (17,16).

3. Procédé selon la revendication 1 ou 2, caractérisé en ce qu'on effectue toutes les soudures sans modification de la distance à la source laser (20-18) et sans modification de la position de la lentille de focalisation selon l'axe du faisceau, sauf pour les soudures d'angle d'une ceinture de la grille.

4. Procédé selon les revendication 1, 2 ou 3, caractérisé en ce que l'on effectue les soudures dans la première chambre (16) alors qu'elle est dans une position où son hublot est sous l'optique de la source laser, puis on déplace les deux chambres (16, 17) de façon à amener le hublot de la seconde chambre sous la dite optique pour effectuer les soudures des grandes faces.

5. Procédé selon l'une quelconque des revendications précédentes, caractérisé en ce que certaines des soudures sont effectuées à l'aide de tirs focalisés en deux points situés sur deux lignes parallèles et à faible distance l'une de l'autre.

6. Procédé selon la revendication 5, caractérisé en ce qu'on définit le trajet optique du faisceau laser par des moyens optiques mis en vibration et en ce qu'on synchronise les vibrations avec celles du tir laser, de façon que chaque tir intervienne alors que le trajet optique est orienté vers le point qui doit recevoir l'énergie.

7. Procédé selon l'une quelconque des revendications précédentes, caractérisé en ce que, avant d'effectuer les soudures, on place un couvercle (50, 52) sur le hublot, on équilibre les pressions de part et d'autre du hublot, on met la chambre étanche (16, 17) sous vide en maintenant l'équilibrage et on introduit l'atmosphère de gaz inerte dans la chambre avant de supprimer l'équilibrage et de retirer le couvercle (50, 52).

8. Dispositif de solidarisation par soudage laser des diverses pièces constitutives d'une grille, comprenant un générateur laser de soudage (20, 18) et une première chambre (16) à atmosphère contrôlée, ayant un hublot transparent, munie d'un premier dispositif (27) d'orientation autour d'un axe, destiné à recevoir un cadre contenant une grille à souder,
caractérisé en ce que le dispositif de solidarisation comprend également une seconde chambre (17) à atmosphère contrôlée ayant un hublot transparent et munie d'un second dispositif de réception d'un cadre contenant une grille à souder, donnant à la grille une orientation perpendiculaire à celle qu'elle a sur le premier dispositif,
en ce que le générateur est porté par une table (19) à déplacements croisés suivant deux directions orthogonales dont l'une est parallèle à l'axe d'orientation du cadre par le premier dispositif,
et en ce que les chambres (16,17) sont déplaçables par des moyens permettant d'amener alternativement leurs hublots dans le faisceau du générateur laser.

9. Dispositif selon la revendication 8, caractérisé en ce que les chambres (16,17) sont portées par un même chariot (21) coulissant sur des glissières (15).

10. Dispositif selon la revendication 8 ou 9 caractérisé en ce que le premier dispositif de réception (27) est prévu pour donner au cadre huit orientations de soudage des faces d'une ceinture de la grille et des coins de la grille.

## Patentansprüche

1. Verfahren zur Herstellung eines Abstandshalters für Brennstabbündel von Kernreaktoren mit folgenden Schritten:
der Abstandshalter (1), dessen Bestandteile (2,5) fest miteinander zu verbinden sind, wird in einem mechanischen Montage- und Stützrahmen angebracht, der Zugangsmöglichkeiten zu den Schweißstellen auf den beiden Hauptflächen und den Seiten des Halters aufweist;
der Rahmen mit dem darin befindlichen Halter wird mit Hilfe einer ersten Ausrichtevorrichtung um eine erste Achse, die sich in einer dichten, mit einer Inertgasatmosphäre befüllten ersten Kammer (16) befindet, gefaßt; die Schweißpunkte auf einer Fläche werden auf einmal mit einem zur Ausrichteachse der Vorrichtung orthogonalen Laserstrahl angebracht, der von einer Laserquelle stammt, die außerhalb der Kammer angebracht ist und der in diese durch eine transparente Scheibe eindringt, anschließend wird der Vorgang an der anderen Fläche wiederholt,
dadurch gekennzeichnet, daß
im Verlauf des Schweißvorgangs auf einer Fläche des Halters der Laserstrahl in zwei zueinander und zu der Strahlungsrichtung des Laserstrahls orthogonalen Richtungen verschoben wird, während der Rahmen in der ersten Kammer (16) starr fixiert bleibt, und, bevor der Vorgang auf einer anderen Fläche wiederholt wird, der Halter mit Hilfe der ersten Vorrichtung um die Achse gedreht wird, die zur Strahlungsrichtung des Laserstrahls orthogonal ist, bis alle Schweißpunkte auf den zur ersten Achse parallelen Flächen angebracht sind;
anschließend der immmer noch in seinem Rahmen befindliche Halter in eine zweite Kammer (17) eingebracht wird, die mit einer zweiten Ausrichtevorrichtung (28) um eine zweite Achse, die zu der ersten parallel ist, versehen ist, aber in der der Halter in einer Richtung angebracht wird, die zu der parallel ist, die von ihm in der ersten Vorrichtung eingenommen wurde, und
die Schweißpunkte auf den Hauptflächen des Halters angebracht werden, wobei jedes Mal der Rahmen starr fixiert ist.

2. Verfahren nach Anspruch 1, dadurch gekennzeichnet, daß die Entnahme eines Halters, das Einbringen eines anderen, zu verschweißenden Halters und das Versehen einer Kammer (16, 17) mit einer Inertgasatmosphäre während des Verschweißens des in der anderen Kammer (17, 16) befindlichen Halters durchgeführt wird.

3. Verfahren nach Anspruch 1 oder 2, dadurch gekennzeichnet, daß alle Schweißpunkte ohne Änderung des Abstands zu der Laserquelle (20-18) und ohne Änderung der Position des Focussierlinse in Richtung der Achse Z des Laserstrahls angebracht werden, außer für die Schweißpunkte eines Eckstücks einer Außenwand des Halters.

4. Verfahren nach einem der Ansprüche 1, 2 oder 3, dadurch gekennzeichnet, daß die Schweißvorgänge in der ersten Kammer (16) durchgeführt werden, während diese in einer Position ist, in der sich die Scheibe unter der Optik der Laserquelle befindet und anschließend die beiden Kammern (16, 17) so verschoben werden, daß die Scheibe der zweiten Kammer unter diese Optik gebracht wird, um das Verschweißen der Hauptflächen durchzuführen.

5. Verfahren nach einem der vorhergehenden Ansprüche, dadurch gekennzeichnet, daß bestimmte Schweißpunkte mit Laserschüssen angebracht werden, die auf zwei in einer geringen Distanz zueinander auf zwei parallelen Linien liegende Punkte gebündelt sind.

6. Verfahren nch Anspruch 5, dadurch gekennzeichnet, daß der Lichtweg des Laserstrahls durch hin-und herschwingende optische Mittel definiert wird und die Schwingvorgänge so mit den Laserschüssen synchronisiert sind, daß jeder Impuls dann abgegeben wird, während der Lichtweg auf den Punkt gerichtet ist, der die Energie erhalten muß.

7. Verfahren nach einem der vorhergehenden Ansprüche, dadurch gekennzeichnet, daß vor dem Anbringen der Schweißpunkte ein Deckel (50, 52) auf die Scheibe gelegt und die Drücke auf der einen und der anderen Seite der Abdeckung angeglichen werden und die dichte Kammer (16, 17) unter Beibehalten des Druckausgleichs evakuiert und mit einer Inertgasatmosphäre versehen wird, bevor der Druckausgleich unterbrochen und der Deckel (50, 52) abgenommen wird.

8. Vorrichtung zum festen Verbinden verschiedener Bestandteile eines Abstandshalters durch Laserschweißen mit einem Laserschweißgenerator (20, 18) und einer ersten Kammer (16) mit einstellbarer Atmosphäre, die eine transparente Scheibe besitzt und mit einer ersten Ausrichtevorrichtung um eine erste Achse versehen ist, die zur Aufnahme eines Rahmens vorgesehen ist, der einen zu verschweißenden Halter enthält,
dadurch gekennzeichnet,
daß die Vorrichtung zum festen Verbinden ebenfalls eine zweite Kammer (17) mit einer einstellbaren Atmosphäre aufweist, die eine transparente Abdeckung besitzt und mit einer zweiten Vorrichtung zur Aufnahme eines Rahmens, der einen zu verschweißenden Halter aufweist, versehen ist, wobei der Halter dann eine zu der in der ersten Vorrichtung eingenommenen Ausrichtung senkrechte Lage einnimmt,
daß der Generator von einer über Kreuz in zwei orthogonale Richtungen verschiebbaren Platte (19) gehalten wird, deren eine Richtung parallel zu der Ausrichteachse des Rahmens in der ersten Vorrichtung ist,
und daß die Kammern (16, 17) über Mittel verschiebbar sind, die es ermöglichen, die Scheiben im Wechsel in den Strahl des Lasergenerator zu bringen.

9. Verfahren nach Anspruch 8, dadurch gekennzeichnet, daß die Kammern auf dem selben Wagen (21) angebracht sind, der auf den Gleitschienen (15) verschoben wird.

10. Verfahren nach Anspruch 8 oder 9, dadurch gekennzeichnet, daß die erste Aufnahmevorrichtung (27) dafür vorgesehen ist, den Rahmen in acht Ausrichtungen zum Verschweißen der Flächen der Außenwand und der Ecken des Halters zu halten.

## Claims

1. A method for manufacturing a grid for a nuclear reactor fuel assembly, including the steps of :
placing the grid (1) whose constituent parts (2,5) are to be mutually secured in a frame for shaping and mechanically holding the grid, having passages for access to points to be welded on the two major faces and on the side faces of the grid;
gripping the grid containing frame with a first device (27) for angular adjustment about a first axis, placed in first airtight chamber 16 containing an inert gaz atmosphere; executing the welds on one face at a time with a laser beam orthogonal to the axis of angular adjustment of the device and delivered by a laser source placed outside the chamber and penetrating into the chamber through a transparent window, then repeating the operation on other faces,
characterized by the steps of:
during welding on one face of the grid, moving the laser beam along two directions which are mutually orthogonal and orthogonal to the direction of the laser beam, while the frame is held stationary in the first chamber (16); rotating the grid with the first device about the first access which is orthogonal to the direction of the laser beam, before the operation is repeated on another face, until all welds on faces parallel to the first axis have been carried out;
then placing the grid, still held in the frame, in a second chamber (17) provided with a second device (28) for angular adjustment about a second axis which is parallel to the first axis, but on which the grid is placed in an angular position orthogonal to the position that it had on the first device, and
carrying out the welds on the major faces of the grid, each time while the frame is held stationary.

2. Method according to claim 1, characterized in that unloading of a grid, loading of another grid to be welded and generation of an inert atmosphere in a chamber (16,17) are carried out while the grid in the other chamber (17,16) is being welded.

3. Method according to claim 1 or 2, characterized in that all welds are carried out without modifying the distance to the laser source (20-18) and without modifying the position of the focussing lens along the axis of the beam except for the angle welds of a belt of the grid.

4. Method according to claim 1, 2 or 3, characterized in that the welds are carried out in the first chamber (16) while it is in a position where its window is under the lens of the laser source, then the two chambers (16,17) are moved for bringing the window of the second chamber under said lens for carrying out the welds of the two major faces.

5. Method according to any one of the preceding claims, characterized in that some of the welds are carried out with laser shots focussed in two points located on two parallel lines at a short distance from each other.

6. Method according to claim 5, characterized in that the optical path of the laser beam is defined by optical means which are vibrated in synchronism with the pulses of the laser, whereby each shot occurs while the optical path is directed towards the point which should receive energy.

7. Method according to any one of the preceding claims, characterized in that, before the welds are carried out, a cover (50,52) is placed on the window, the pressures accross the window are balanced, the chamber (16, 17) is evacuated while maintaining pressure balance and the atmosphere of inert gas is introduced into the chamber before pressure balance is suppressed and the cover (50,52) is removed.

8. Device for mutually securing the different constituent parts of the grid by laser welding, comprising a welding laser generator (20,18) and a first controlled atmosphere chamber (16) having a transparent window, provided with a first device (27) for angular adjustment around an axis, apt to receive a frame containing a grid to be welded,
characterized in that the securing device further comprises a second control atmosphere chamber (17) having a transparent window and provided with a second device for receiving a frame containing a grid to be welded, impressing to the grid an angular position which is orthogonal to the direction that it had on the fist device,
in that the generator is carried by a crossed movement table (19) movable along to mutually orthogonal directions, one of which is parallel to the axis of angular adjustment of the frame by the first device,
and in that the chambers (16,17) are movable by means which make it possible to bring their windows alternatively along the beam of the laser generator.

9. Device according to claim 8, characterized in that the chambers (16,17) are carried by a same carriage (21) slidably received on slides (15).

10. Device according to claim 8 or 9, characterized in that the first device (27) is arranged for locating the frame in eight angular positions for welding the faces of the belt of the grid and the corners of the grid.
